Europäisches Patentamt

European Patent Office

Office européen des brevets

(19)

(11) Veröffentlichungsnummer: **0 032 892**
**B1**

(12)

# EUROPÄISCHE PATENTSCHRIFT

(45) Veröffentlichungstag der Patentschrift:
21.08.85

(51) Int. Cl.⁴: **C 25 D 7/06, C 25 D 17/02**

(21) Anmeldenummer: **81890007.8**

(22) Anmeldetag: **20.01.81**

(54) Einrichtung zur Herstellung von galvanisch beschichteten Drähten.

(30) Priorität: **22.01.80 AT 334/80**

(43) Veröffentlichungstag der Anmeldung:
**29.07.81 Patentblatt 81/30**

(45) Bekanntmachung des Hinweises auf die Patenterteilung:
**21.08.85 Patentblatt 85/34**

(84) Benannte Vertragsstaaten:
**BE CH DE FR GB IT LI LU NL SE**

(56) Entgegenhaltungen:
**AT - B - 354 211**

(73) Patentinhaber: **Computer-Process-Automations Gesellschaft m.b.H., Plüddemanngasse 33, A-8010 Graz (AT)**

(72) Erfinder: **Feichtinger, Peter, Triesterstrasse 242, A-8055 Graz (AT)**
Erfinder: **Kolb, Walter, Polzergasse 8, A-8010 Graz (AT)**

(74) Vertreter: **Gibler, Ferdinand, Dipl.Ing.Dr.tech., Dorotheergasse 7, A-1010 Wien (AT)**

BUNDESDRUCKEREI BERLIN

**Beschreibung**

Die Erfindung bezieht sich auf eine Einrichtung zur Herstellung von galvanisch beschichteten Drähten, Bändern od. dgl.

Aus der AT-B 354 211 ist es z. B. bekannt, die Drähte od. dgl. zuerst einer Wärmebehandlung zu unterziehen, um eine Gefügeumwandlung zu erzielen, wobei die Einhaltung bestimmter Temperaturen wesentlich ist und den derartig vorbehandelten Draht zu reinigen und mit Wasser zu spülen und anschließend einer galvanischen Behandlung zu unterziehen.

Anschließend wird der galvanisch behandelte Draht od. dgl. mit Wasser gespült und getrocknet und zumeist einer weiteren Wärmebehandlung unterzogen, um ein Eindiffundieren des Beschichtungsmaterials zu erreichen. Damit können z. B. getrennte Kupfer- und Zinkschichten durch Diffusion in eine Messingschicht umgewandelt werden.

Bei dieser Behandlung ergibt sich das Problem, daß insbesondere beim Beizen, wenn mehrere Drähte od. dgl. nebeneinander durch die Bäder geführt werden, diese ungleich auf die Behandlung ansprechen. Da verstärken sich die Unterschiede beim Ansprechen auf die Behandlung mit Fortdauer der Behandlung immer mehr, wie bisher üblich, eine gemeinsame Stromzuführung für die parallel laufenden Drähte vorgesehen ist.

In diesem Falle kommt es zu einer Stromverteilung auf die einzelnen Drähte die im wesentlichen durch die Übergangswiderstände vom Bad zum Draht bestimmt, sodaß der reinste Draht mit dem größten Strom beaufschlagt wird, wogegen der den meisten Verunreinigungen behaftete Draht mit dem kleinsten Stromanteil beaufschlagt wird und aus diesem Grunde u. U. nicht vollständig gereinigt wird, wogegen es beim reinsten Draht zu einer Beschäftigung durch Überbeizen kommen kann.

Außerdem kann es bei der Behandlung nach der AT-B 354 211, bei der nur nach dem Beizen und nach dem Abschluß der galvanischen Behandlung, die beim Auftragen mehrerer Schichten durch eine entsprechende Anzahl von Bädern führt, zu einem Verschleppen von Flüssigkeitspartikeln von einem Bad zum nächsten kommen, wodurch es zu einer erheblichen Verschlechterung der Behandlung des Drahtes od. dgl. kommen kann.

Ziel der Erfindung ist es, Einrichtung der eingangs erwähnten Art vorzuschlagen, die eine optimale Behandlung von mehreren parallel laufenden Drähten, Bändern od. dgl. ermöglicht.

Erfindungsgemäß wird dies dadurch erreicht, daß einer Abwickeleinrichtung in an sich bekannter Weise eine Wärmebehandlungseinrichtung und dieser ein Beizbad, ein Reinigungsbad, verschiedene galvanische Bäder zum galvanischen Auftrag von Beschichtungsmaterial und diesen Bädern gegebenfalls eine weitere Wärmebehandlungseinrichtung und eine Aufwickeleinrichtung nachgeordnet sind, die Bäder in eine Anzahl von parallel angeordneten Kammern unterteilt sind, in denen je eine Elektrode angeordnet ist, deren Potential gegen allen parallel laufende Drähten, Bändern od. dgl., von denen je einer bzw. eines durch die Kammer läuft, gemeinsamem Kontaktwalzen oder eine andere Stromführung individuell regelbar ist, und daß jedem Bad unmittelbar eine Spül- und Trocknungsvorrichtung nachgeschaltet ist.

Damit wird es möglich, jeden Draht od. dgl. mit der gewünschten und für den jeweiligen Behandlungsschritt optimalen Stromdichte zu beaufschlagen, wobei Änderungen derselben, wie sie z. B. beim Beizen aufgrund einer Änderung des Übergangswiderstandes vom Bad zum Draht häufig auftreten, rasch reagiert werden kann und außerdem wird durch die erfindungsgemäße Einrichtung ein Verschleppen von den dem Draht anhaftenden Flüssigkeitströpfchen in ein nachfolgendes Bad sicher verhindert, wodurch die mit einem solchen Verschleppen zwangsläufig verbundene Verminderung der Qualität der Behandlung vermieden wird.

In Weiterbildung der erfindungsgemäßen Einrichtung kann so vorgegangen werden, daß die Bäder mittels isolierender Wände in eine Anzahl von parallel angeordneten Kammern unterteilt sind.

Ein weiteres Ziel der Erfindung ist es, bei der erfindungsgemäßen Einrichtung die nötige Aufbereitung des Elektrolyten auf einfache Weise zu ermöglichen. Dies wird in Weiterbildung der Erfindung dadurch erreicht, daß für sämtliche Kammern eines Bades eine gemeinsame Elektrolytzuführung und ein Elektrolytsammelbehälter vorgesehen ist, mit welchen jede durch Wände aus isolierendem Material gebildete Kammer zwecks gegenseitiger Entkopplung der Elektroden über vom Elektrolyt durchströmte Widerstandsstrecken in Form von längeren Verbindungskanälen mit relativ kleinem Querschnitt verbunden sind. Auf diese Weise ist es möglich, einerseits eine individuelle Regelung des Stromes in den einzelnen Kammern zu erreichen ohne auf den Vorteil einer gemeinsamen Elektrolytaufbereitung verzichten zu müssen. Bei entsprechender Wahl der Querschnitte und Längen der Elektrolytzu- und - ableitungen können die Ausgleichsströme zwischen den Elektroden der einzelnen Kammern, die sich über diese Strecken ausbilden können, auf ca. 1% des in jeder Kammer von der Elektrode zum Draht fließenden Stromes begrenzt werden, sodaß keine nennenswerte Beeinflussung bzw. Störung der Regelung jeder einzelnen Kammer eintritt. Die Leitungen für den Elektrolyten und die mit dem Elektrolyten in Berührung kommenden Wände der Bäder müssen selbstverständlich aus isolierendem Material wie z. B. Kunststoff hergestellt sein.

Um eine weitere Vereinfachung des Aufbaues einer erfindungsgemäßen Einrichtung zu erzielen, ist gemäß einem weiteren Erfindungsmerkmal vorgesehen, daß im Beiz- und im Reinigungsbad, durch welches ein und derselbe Draht od. dgl. geführt ist, je eine Elektrode angeordnet ist, zwischen denen eine regelbare Potentialdifferenz aufrecht erhalten ist, wobei in einem Bad eine anodische und im anderen eine kathodische Stromführung vorgesehen ist. Dadurch erübrigt sich eine separate Stromzuführung für den Draht, sodaß auf die einigermaßen anfälligen und wegen ihres doch in Grenzen schwankenden Übergangswiderstandes einen Störfaktor bildenden Kontaktwalzen verzichtet werden kann.

Grundsätzlich dient die elektrolytische Beizung zur Entfernung von Oberflächenschichten und die nachfolgende elektrolytische Reinigung zur Entfernung von Beizrückständen. Dabei hat sich herausgestellt, daß für das Beizen zweckmäßig ein saurer Elektrolyt und für die Reinigung ein basischer Elektrolyt verwendet wird.

Besonders vorteilhaft ist es, wenn in weiterer Ausgestaltung der Erfindung das Beizbad, das Reinigungsbad und die galvanischen Bäder in einzelne parallele Kammern unterteilt sind, in denen je eine Elektrode angeordnet ist, und die Spannung zwischen je zwei in den über den gleichen Draht od. dgl. verbundenen, gegebenenfalls unterschiedliche Längen aufweisenden Kammern des Beizbades, des Reinigungsbades und der galvanischen Bäder angeordneten Elektroden bzw. der über diese fließende Strom individuell regelbar ist, wobei für sämtliche Kammern eines Bades eine gemeinsame Elektrolytzuführung und ein Elektrolytsammelbehälter vorgesehen ist, mit welchem jede durch Wände aus isolierendem Material gebildete Kammer zwecks gegenseitiger Entkopplung der Elektroden über vom Elektrolyt durchströmte Widerstandsstrecken in Form von längeren Verbindungskanälen mit relativ kleinem Querschnitt verbunden sind. Auf diese Weise läßt sich jeder Draht mit der erforderlichen Stromstärke beaufschlagen und Änderungen aufgrund unterschiedlicher Übergangswiderstände einzelner parallel verlaufender Drähte vermeiden. Außerdem wird dadurch ein einfacher Betrieb im Hinblick auf die Aufbereitung des Elektrolyten ermöglicht. Dudrch unterschiedliche Längen der Kammern des Beiz- und des Reinigungsbades lassen sich die für jeden Vorgang erforderlichen Stromdichten bei gleichem durch beide Kammern fließenden Strom erreichen.

Um bei Galvanikbädern eine besonders hohe Ausnutzung des Anodenmaterials zu erreichen, kann eine weitere Ausführungsform der Erfindung darin bestehen, daß die Elektrode in einem Trog aus isolierendem Material eingelegt ist und mit ihren Seitenwänden an den seitlichen Trogwänden sowie dem Trogboden an- bzw. aufliegt und die Elektrolytzuführung in einer Kammer über einen unter dem Trog angeordneten und in seinen Seitenwänden mit Auslässen versehenen Kanal erfolgt. Auf diese Weise wird erreicht, daß die Abtragung praktisch nur an der Oberfläche erfolgen kann, daß die wirksame Anodenfläche über die gesamte Betriebszeit der Anode gleichbleibt. Außerdem wird durch die liegende Anodenanordnung auch eine gedrängte Bauweise ermöglicht, bei der gleichzeitig die Gefahr von Kurzschlüssen zwischen Elektrode und Draht weitgehend vermieden ist.

Ein weiteres sehr wesentliches Kriterium für die Qualität des Endproduktes und für einen günstigen Betrieb der Anlage ist es, daß die Verschleppung von Flüssigkeit in ein nachfolgendes Bad zuverlässig verhindert wird.

Zu diesem Zweck ist eine bevorzugte Ausführungsform der Erfindung dadurch gekennzeichnet, daß die Spülvorrichtung eine Drahtführung aufweist, welche einen Kanal der gegebenenfalls gekrümmt ist, an mindestens zwei voneinander distanzierten Stellen kreuzt bzw. durchsetzt, gegen dessen Eingang eine mit einer Wasserzufuhr verbundene Düse gerichtet ist, wobei der Draht od. dgl. den Kanal nahe dessen Eingang das letzte Mal auf seinem Weg kreuzt. Auf diese Weise wird erreicht, daß das Wasser nach dem ersten Auftreffen auf den Draht od. dgl. nicht sofort nutzlos verströmt sondern nochmals auf den Draht od. dgl. auftrifft, sodaß eine Vorspülung mit dem abströmenden Wasser erfolgt. Diese bessere Ausnutzung des eingesetzten Wassers ist insbesondere aus dem Grunde wesentlich, da für diesen Zweck in der Regel demineralisiertes Wasser verwendet wird, dessen Herstellung einen nicht unbeträchtlichen Aufwand erfordert. Die durch den Kanal bedingte Vorspülung ermöglicht es, mit geringeren Wassermengen die vollständige Entfernung von an dem Draht od. dgl. anhaftenden, aus dem vorhergehenden Bad stammenden Flüssigkeitspartikeln zu erreichen.

Um eine solche Spülvorrichtung in konstruktiver Hinsicht besonders einfach zu gestalten, kann in Weiterbildung der Erfindung vorgesehen sein, daß die Drahtführung in der Trennebene eines mit einem Ablauf versehenen Behälters und dessen Deckel angeordnet ist, wobei in dem letzteren der Kanal als Vertiefung der Unterseite eingearbeitet ist und der Behälter im Bereich dieser Vertiefung einen Steg aufweist, dessen Breite kleiner als die Länge der Vertiefung ist und auf dem der Draht abgestützt ist. Dies ermöglicht es auch, den Draht in sehr einfacher Weise bei geöffnetem Deckel in die Spülvorrichtung einzulegen.

Um ein Verspritzen von Wasser beim Öffnen des Deckels zu verhindern, kann erfindungsgemäß weiteres vorgesehen sein, daß zwischen der Wasserzuleitung und der Düse ein Ventil zwischengeschaltet ist, welches mittels eines federbelastenden Stößels betätigbar ist, der gegen den Deckel drückt und in seiner gedrückten Stellung den Wasserdurchfluß freigibt.

Außerdem kann zur Erleichterung des Trocknens des Drahtes od. dgl. nach einem weiteren Merkmal der Erfindung vorgesehen sein, daß in Durchlaufrichtung des Drahtes od. dgl. gesehen hinter der Düse im Deckel und in einem Steg des Behälters gehaltenen Abstreifflippen aus einem elastischen Material vorgesehen sind, zwischen denen der Draht od. dgl. hindurchführbar ist. Dadurch wird ein weitgehendes Abstreifen des Wassers vom Draht od. dgl. erreicht, sodaß für das anschließende Trocknen mittels Luft mit einem geringeren Einsatz von Luft das Auslangen gefunden wird. Diese Trocknung ist vorteilhaft, um die Einbringung von Wasser in das nachfolgende Bad oder in eine nachgeordnete Wärmebehandlungseinrichtung zu vermeiden.

Eine weitere Ausführungsform der Erfindung kann darin bestehen, daß die Trocknungsvorrichtung durch einen mit Luftzufuhr versehenen geschlossenen Kanal gebildet ist, der von mindestens einer vorzugsweise aus Keramik hergestellten Drahtdurchführung durchsetzt ist und zumindest an der Drahteinlaufseite der Drahtdurchführung eine diese umgehende mit einer sich nach außen zu sich verjüngende Bohrung versehene, mit dem Kanal verbundene Platte vorgesehen ist, welche gemeinsam mit dem Endbereich der Drahtdurchführung eine Ringdüse bestimmt, durch welche die Luft auf den Draht od. dgl. gerichtet, ausströmt. Auf diese Weise wird eine exakte Führung des Drahtes sichergestellt und gleichzeitig ein Kontakt des Drahtes mit den Düsenquerschnitt bestimmenden Flächen vermieden, wodurch eine Vergrößerung des Düsenquerschnittes aufgrund der unvermeidlichen Verschleißerscheinung ausgeschlossen ist, die zu einem erhöhten Luftverbrauch führen. Außerdem wird aufgrund der durchgehenden Führung des Drahtes eine partielle Belastung im Bereich der Enden der Führung in kleinen Grenzen gehalten, wodurch der Verschleiß der Führung bzw. die Beanspruchung der Oberfläche des Drahtes od. dgl. dementsprechend gering wird und hohe Standzeiten erreicht werden. Weiters kann auch die bei bekannten Trocknungseinrichtungen notwendige Düse am drahtauslaufseitigen Ende der Drahtdurchführung entfallen, woraus ein wesentlich verminderter Luftbedarf resultiert.

Bei einer bevorzugten Ausführungsform einer solchen Trocknungsvorrichtung kann gemäß der Erfindung vorgesehen sein, daß die Platte Teil einer Hutmutter ist, die auf einen Ansatz des Kanals aufschraubbar ist und die Drahtdurchführung in diesem Ansatz mittels einer mit einer Vielzahl von axialen Bohrungen versehenen Zentrierscheibe gehalten ist und vorzugsweise zwischen Ansatz und Hutmutter eine Dichtung vorgesehen ist. Damit ist es auf einfache Weise möglich, den Düsenquerschnitt auf einfache Weise durch Verdrehen der Düsenkappe zu regeln, bzw., falls eine Düse nicht benötigt wird, diese zu schließen, wodurch erhebliche Einsparungen an Luft erzielbar sind. Außerdem ist es im Falle eines Ausfalls der Luftversorgung auch möglich, mit der Hutmutter eine Gummimembrane zu befestigen, durch welche der Draht od. dgl. hindurchtritt, sodaß damit eine Trocknung des Drahtes erreichbar ist.

Bei einer Wärmebehandlung des Drahtes od. dgl. ist es wesentlich, einen sehr engen Temperaturbereich einzuhalten. Um dies sicherzustellen, kann nach einem weiteren Merkmal der Erfindung vorgesehen sein, daß die Wärmebehandlungseinrichtung mindestens zwei für die Stromzuführung zum Draht od. dgl. vorgesehene Kontakwalzen aufweist, die mit einer regelbaren Spannungsquelle verbunden sind und in unmittelbarer Nähe der Berührungspunkte des Drahtes mit den Kontaktwalzen Schleifer angeordnet sind, welche den Spannungsabfall über die stromdurchflossene Drahtstrecke abgreifen, und die mit einem Multiplizierer in Verbindung stehen, dem auch die Stromwerte zuführbar sind und der einen Regler mit den Istwerten versorgt, welcher die Spannungsquelle steuert. Auf diese Weise ist es möglich, unabhängig von den sich ändernden Übergangswiderständen sowohl bis zu den Kontaktwalzen wie auch von den Kontaktwalzen auf den Draht diesem mit einer konstanten Leistung und somit bei konstanter Durchlaufgeschwindigkeit mit einem konstanten Betrag an Energie zu versorgen. Da die Abstrahlungsverluste sehr leicht konstant gehalten werden können, ergibt die konstant zugeführte Energie auch eine konstante Temperatur des Drahtes.

Die Erfindung wird nun an Hand der Zeichnung näher erläutert. Dabei zeigen:

Figur 1 ein Schaltschema einer Einrichtung zur Wärmebehandlung

Figur 2 das Schaltschema für eine Beiz- und Reinigungsstrecke

Figur 3 eine Draufsicht auf ein Becken

Figur 4 einen Schnitt gemäß der Linie V-V in Figur 3,

Figur 5 und 5a Schnitte ähnlich der Figur 4 durch abgewandelte Ausführungsformen,

Figur 6 und 6a Schnitte gemäß den Linien VII-VII in Figur 5 bzw. VIIa-VIIa in Figur 5a,

Figur 7 das Schaltschema eines Galvanikbeckens,

Figur 8 das Ersatzschaltbild des Beckens gemäß Figur 7,

Figur 9 ein Blockschaltbild der Stromversorgung einer Kammer eines Beckens,

Figur 10 einen Schnitt durch eine Spüleinrichtung,

Figur 11 eine Trocknungsvorrichtung und

Figur 12 einen Schnitt gemäß der Linie XIII-XIII.

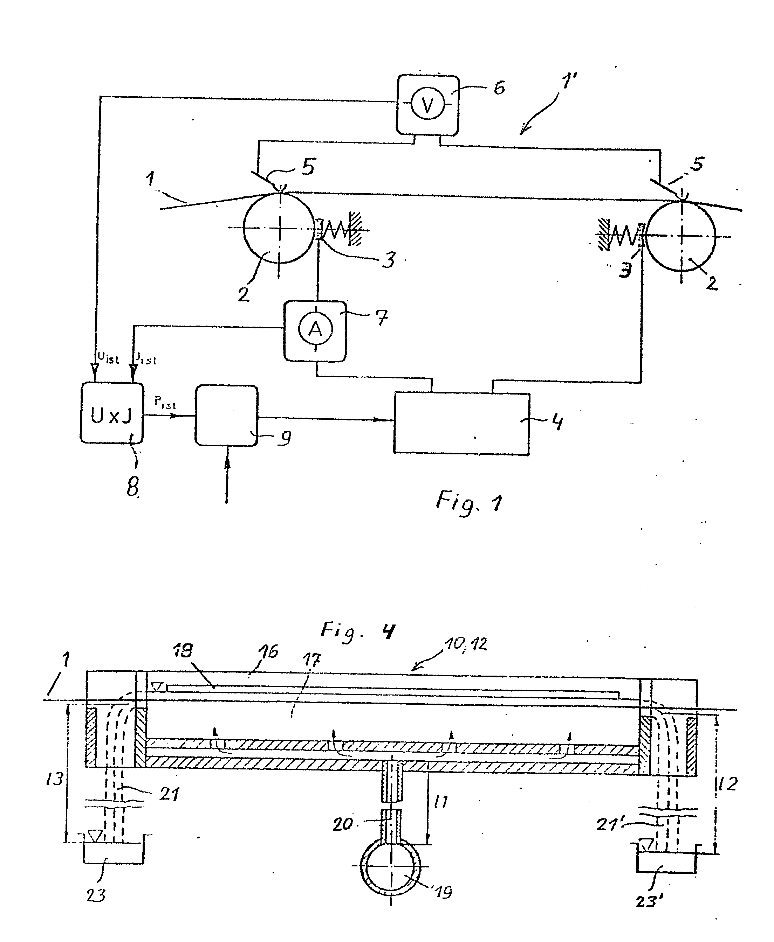

Bei der in Figur 1 schematisch dargestellte Wärmebehandlungseinrichtung 1' erfolgt die Stromzuführung zum Draht 1 über Kontaktwalzen 2, denen der Strom über die Bürsten 3 von einer regelbaren Spannungsquelle 4 zugeführt wird. Im Bereich der Kontaktzone zwischen Draht 1 und Kontaktwalze 2 ist jeweils ein Schleifer 5 angeordnet, über den die Spannung über dem Draht 1 abgegriffen und mit dem Spannungsmesser 6 gemessen und in ein Spannungssignal umgesetzt wird. Dieses Signal wird ebenso wie das vom Strommesser 7 ermittelte Signal einem Multiplizierer 8 zugeführt, und das so ermittelte Leistungssignal wird einem Regler 9 zugeführt der dieses Signal mit einem Sollwert vergleicht und ein Stellsignal abgibt, welches der regelbaren Spannungsquelle 4 zugeführt wird. Dadurch ergibt sich unabhängig von den u. U. schwankenden Überbergangswiderständen eine konstante Energiezufuhr zum zu erwärmenden Draht.

Der wärmebehandelte Draht 1 durchläuft eine Beiz- und Reinigungsstrecke. Diese weist ein Beizbecken 10, eine Spülvorrichtung 11 und Reinigungsbecken 12 auf.

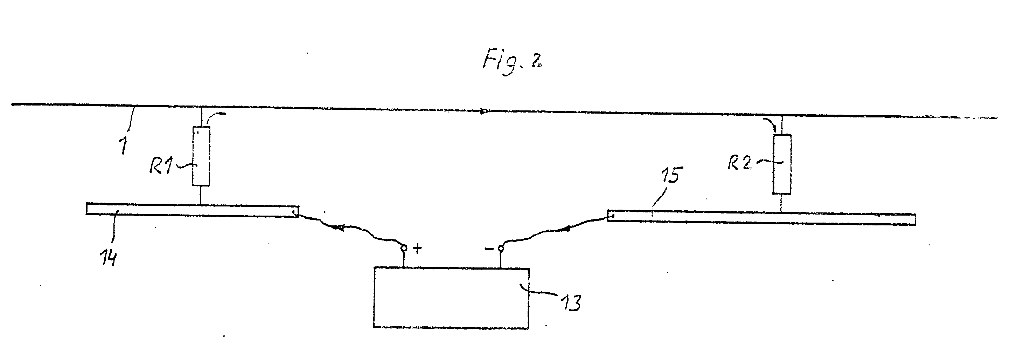

Wie aus Figur 2, die das zugehörige Schaltschema zeigt, ersichtlich ist, erfolgt die Stromzuführung ohne Kontaktwalzen. Von einer Konstantstromquelle 13 erfolgt die Stromzufuhr zur Anode 14 im Beizbecken 10, von der aus der Strom über die Strecke des sauren Elektrolyten die durch den Widerstand R1 symbolisiert ist, zum Draht 1 gelangt. Von diesem schließt sich der Stromkreis über die Elektrolytstrecke R2 im basischen Elektrolyten des Reinigungsbeckens zur Kathode 15, die mit der Konstantstromquelle 13 verbunden ist.

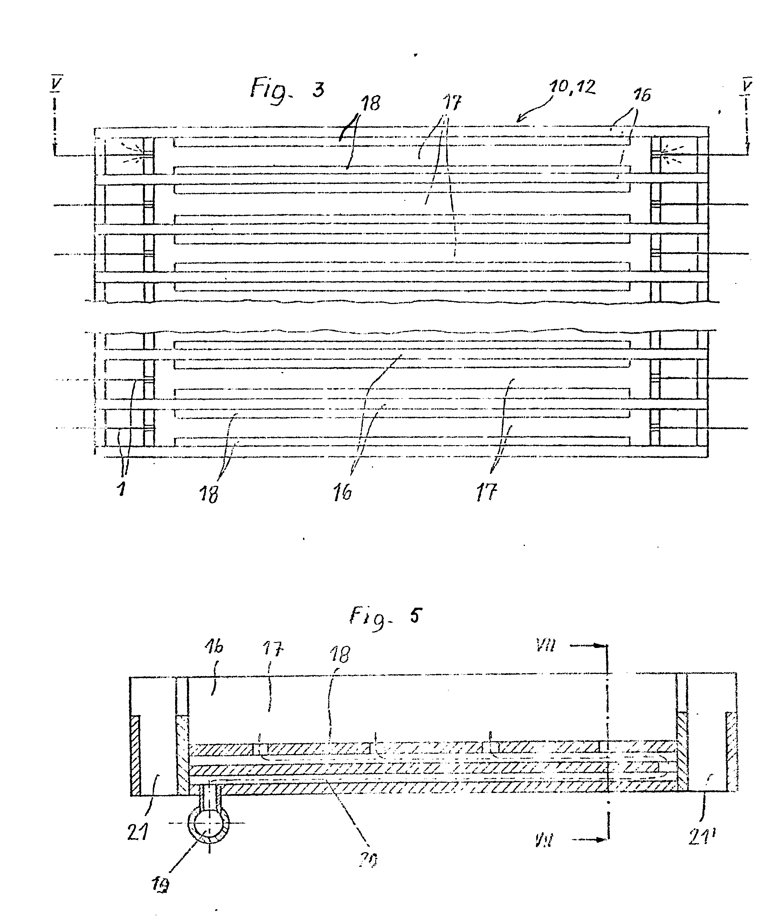

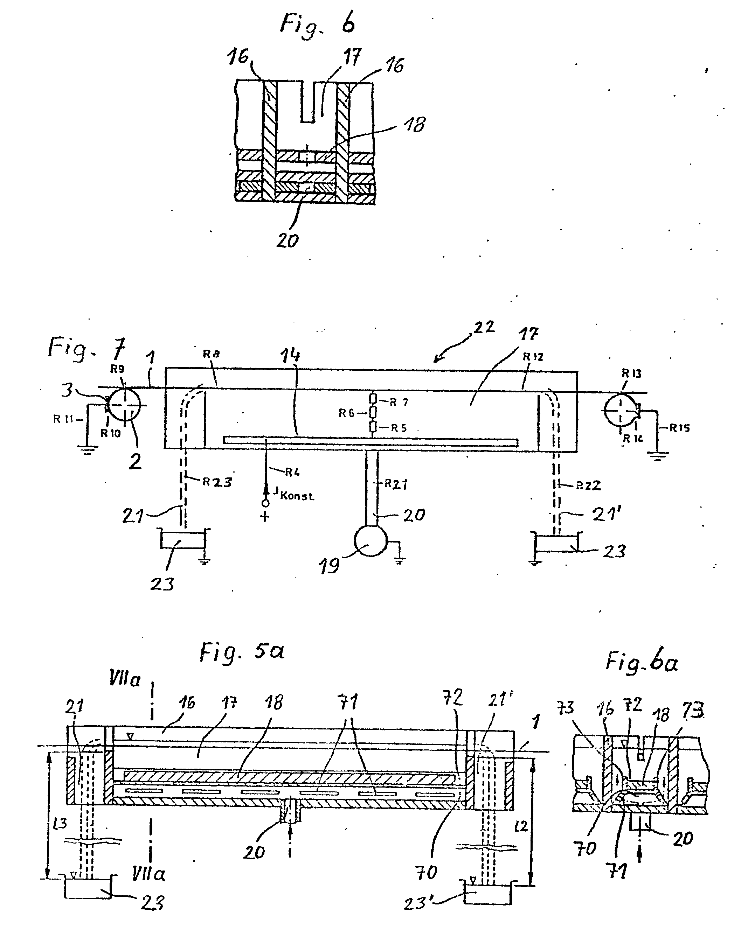

Aus Figur 3 und 4 ist ersichtlich, daß die Becken 10, 12 ebenso wie die Galvanikbecken durch isolierende Trennwände 16 in Kammern 17 unterteilt sind, durch welche je ein Draht 1 hindurch läuft und in denen je eine Elektrode 18 angeordnet ist. Sämtliche Kammern 17 eines Beckens sind über eine gemeinsame Elektrolytzuführung 19 mit Elektrolyt versorgt, der aus jeder Kammer über separate Ableitungen 21, 21' in einen gemeinsamen Elektrolyt-Sammelbehälter 23 abfließt. Dabei ist jede Kammer 17 über eine eigene Elektrolytleitung 20 mit der gemeinsamen Elektrolytzuführung 19 verbunden, sodaß sich zwischen den Elektroden benachbarter Kammern über die getrennten Elektrolytleitungen 20 und Ableitungen 21, 21' Widerstandstrecken ergeben, die zur gegenseitigen Entkopplung individuell in ihrer Spannung gegen den Draht 1 bzw. der Elektrode der vor- bzw. nachgeordneten Kammer, durch welche derselbe Draht gezogen ist, regelbaren Elektrode 18 einer jeden Kammer dienen.

Bei der in Figur 5 und 6 dargestellten Ausführungsform verläuft die Elektrolytleitung 20 waagerecht im Boden der Kammer 17, wodurch große Längen und somit eine gute Entkopplung auf einfache Weise erreichbar ist. Die Elektrode 18 ist dabei zum Unterschied von der Figur 3 liegend angeordnet. Gleiches gilt bei der Ausführungsform gemäß Figur 5a und 6a. Dadurch wird der Vorteil erreicht, daß die Kammern 17 sehr schmal ausgebildet werden können und überdies die Gefahr eines Kurzschlusses zwischen Elektrode und Draht 1 verglichen mit stehender Elektrodenanordnung wesentlich vermindert wird.

Bei der Ausführungsform nach Figur 5a und 6a ist die Elektrode 18 in einem Trog 72 eingelegt, der auf einem Kanal 70 aufgesetzt bzw. mit diesem einstückig ausgebildet ist. Dieser Kanal 70, der ebenso wie der Trog aus isolierendem Material hergestellt ist, weist Auslässe 71 auf, die in dessen Seitenwänden angeordnet sind und durch die der Elektrolyt in die Kammer 17 strömt. Durch diese Anordnung ergibt sich der Vorteil, daß eine direkte Umspülung der Elektrode durch die hochgezogenen Seitenwände 73 des Troges 72 vermieden wird und eine stärkere laminare Strömung des Elektrolyten zugelassen werden kann. Außerdem ergibt sich dadurch eine gleichmäßigere Abtragung falls die Elektrode 18 als Anode geschaltet ist, und somit eine höhere Ausnützung des Anodenmaterials, bei gleichbleibender wirksamer Anodenfläche. Letztere ist dadurch bedingt, daß die Abtragung praktisch nur an der freiliegenden Oberseite erfolgen kann, wobei die Anode bis unter 1mm Dicke abgetragen werden kann, was zu einer besonders hohen Materialausnutzung beiträgt.

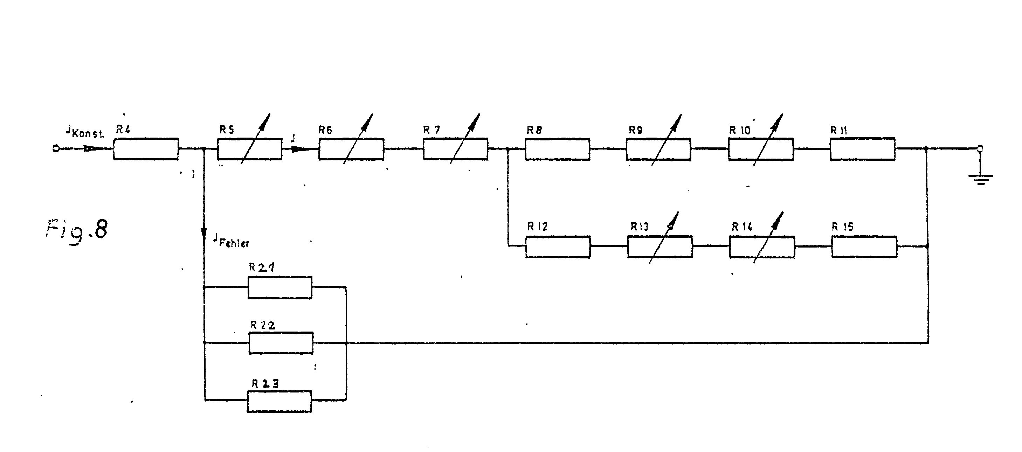

Figur 7 zeigt schematisch den Anschluß und die Widerstandsstrecken bei einem Galvanikbecken 22. Der Draht 1 wird über die Bürsten 3 und Kontaktwalzen 2 an das gleiche Potential wie die Elektrolyt-Sammelbehälter 23, die gemeinsame Elektrolytzuführung 19 gelegt und die Elektrode 18 über eine Konstantstromquelle mit Strom versorgt. Bei dieser Stromzuführung sind die einzelnen Widerstände wie folgt bezeichnet:

| R4 | Zuleitungswiderstand zur Anode 14, |
|---|---|
| R5 | Übergangswiderstand Anode-Elektrolyt |
| R6 | Elektrolytwiderstand |
| R7 | Übergangswiderstand Elektrolyt-Draht |
| R8, R12 | Drahtwiderstand |
| R9, R13 | Übergangswiderstand Draht-Kontaktwalze |
| R10, R14 | Bürstenwiderstand |
| R11, R15 | Widerstand der Walzenzuleitungen |
| R21 | Widerstand der Elektrolytleitung 20 |
| R22, R23 | Widerstand der Ableitungen 21, 21'. |

Wie aus dem Ersatzschaltbild (Figur 8) für das Galvanikbecken gemäß Figur 7 ersichtlich ist, ergibt sich eine Serienschaltung der Widerstände R4, R5, R6, R7 und eine zu dieser in Serie liegende Parallelschaltung der Widerstände R8 bis R15.

Diese Strecke, über welche der Nutzstrom fließt, tritt in jeder Kammer 17 des Beckens 22 auf. Parallel zu dieser Strecke liegt die Parallelschaltung der durch die Elektrolytleitung 20 und die Abteilungen 21, 21', bestimmten Widerstände R21, R22, E23, über welche ein Fehlerstrom fließt. Durch entsprechende Dimensionierung der Elektrolytleitung 20 und der Ableitung 21, 21' die entweder durch einen Schlauch oder als frei Überlaufstrecke ausgebildet sein können, gelingt es den Fehlerstrom auf 1% des Nutzstromes zu begrenzen, sodaß die Regelung der einer jeden Kammer 17 separat zugeordneten Stromquelle davon praktisch nicht beeinflußt wird.

Die elektrolytische Abscheidung von Metallen ist in erster Linie ein elektrochemisches Problem. Unter der Wirkung des Stromes bewegt sich das Metallion, das sich zunächst im Inneren des Elektrolyten (wäßrige Lösung) befindet, in seinem hydratisierten Ausgangszustand auf die Kathode zu. Diese Bewegung wird durch drei verschiedene Antriebskräfte verursacht:

1. Die elektrostatische Anziehung (Inonenwanderung)
2. Die Diffusion, die das — während der Elektrolyse stets entstehende — Gefälle in der Konzentration der Metallionen zur Kathode auszugleichen sucht. Ein solches Konzentrationsgefälle bildet sich unmittelbar an der Kathode in einer Flüssigkeitsschicht von etwa 10^{2} cm Dicke aus (Kathodenfilm).
3. Die Konvektion, die von einer Wärmebewegung, vom zuströmenden Elektrolyten oder von aufsteigenden Gasblasen in Kathodennähe herrühren kann.

In der Nähe der Kathode gelangt das Metallion in den Kathodenfilm und gerät damit unmittelbar in das Konzentrationsgefälle, das je nach angewandter Stromdichte mehr oder weniger steil zur Kathode hin abfallen kann. Nach Durchquerung des Kathodenfilms erreicht das Metallion die elektrochemische Doppelschicht an der Phasengrenze Kathode/Elektrolyt, die aus einer diffusen und aus einer starren, der Kathode nächst gelegenen Schicht (sogenannte Helmholtz-Schicht) besteht.

Zunächst durchquert es den diffusen Bereich der Schicht, der mit der Erhöhung der angelegten Stromdichte dünner, aber auch dichter wird. In diesem Bereich ergeben sich elektrische Feldstärken zwischen $10^4$ und $10^5$ V/cm, unter deren Wirkung sich das Metallion von der umliegenden Hydrathülle löst. Im Endstadium gelangt das Metallion an eine beliebige Stelle in der elektrolytseitigen Belegung des starren Bereichs der elektrochemischen Doppelschicht. Die Zusammensetzung dieser Helmholtz-Schicht ist für die elektrochemischen Vorgänge an der Kathode von entscheidender Bedeutung.

Insbesondere ist die Art, in der das Metallion in den Gitterverband aufgenommen wird, von den momentanen, energetischen Zuständen in der Helmholtz-Schicht abhängig. Zustandsänderungen im Bereich der Doppelschicht unterliegen einer Relaxationszeit von $10^{-4}$ bis $10^{-3}$ s (je nach Stromdichte).

Da die zeitliche Konstanz der Zustände in diesem Bereich mit einer homogenen Auflage in direktem Zusammenhang steht, ergibt sich die Forderung, die Stromdichte konstant zu halten. Stromänderungen haben also nicht nur einen Einfluß auf die Auflagenmenge, sondern bringen auch durch die Stromdichtenänderungen eine inhomogene Schichtenzusammensetzung mit sich, die wiederum nach thermischen Behandlungen (Diffusion) wechselnde, mechanische Eigenschaften (Oberflächenhärte etc.) und damit Unregelmäßigkeiten bei nachfolgenden Verbindungen (Ziehen) hervorrufen.

Werden Sollwertabweichungen der Stromdichte mit Regelgeschwindigkeiten, die im Bereich der Relaxationszeiten liegen, ausgeglichen, so sind die geforderten Bedingungen in erster Näherung erfüllt.

Neben den Eigenschaften des Elektrolyten, den verwendeten Anodenmaterial und der Stromdichte zeigt sich ein nicht unwesentlicher Einfluß der geometrischen Anordnung der Anodenfläche und der Strömung des Elektrolyten. Eine starke Elektrolytumwälzung unter Vermeidung von Turbulenzen ist für den Prozeß von größter Wichtigkeit.

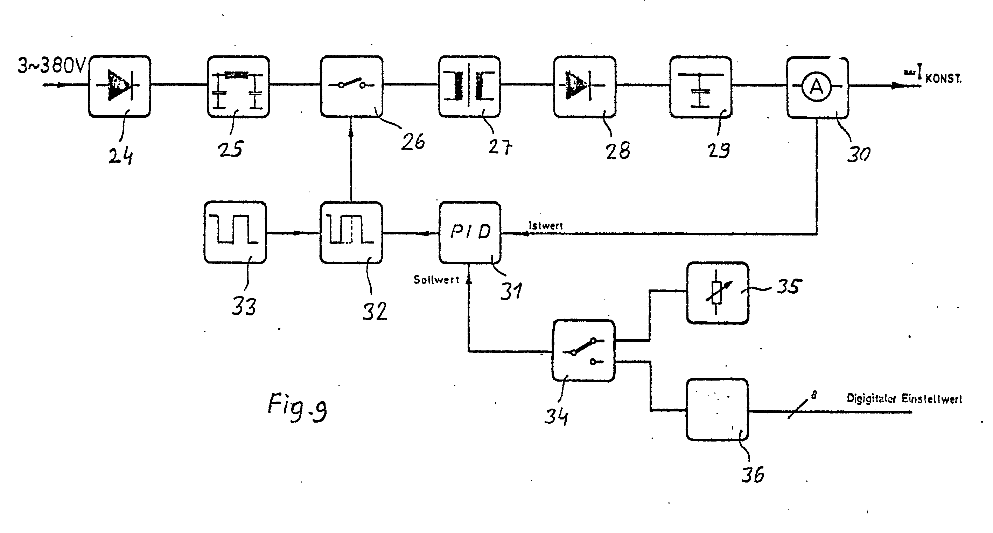

Zur Erzielung eines konstanten Stromes ist eine Konstantstromquelle vorgesehen, deren Blockschaltbild aus Figur 9 ersichtlich ist, wobei für jede Kammer, falls es sich um ein Galvanikbad handelt bzw. jedes Paar von Kammern falls es sich um die Beiz- und Reinigungsstrecke handelt, eine Konstantstromquelle vorgesehen ist. Ein solcher Regelmodul erlaubt eine exakte Einstellung des Stromes, und ermöglicht Regelgeschwindigkeiten von weniger als 0,5 ms bei Regelabweichungen und einer Restwelligkeit von max 1% einzuhalten.

Die aus Figur 9 ersichtliche Konstantstromquelle stellt einen getakteten Stromkonstanter dar, der dem Netz nur soviel an Leistung entnimmt, wie zur Aufrechterhaltung des eingestellten Stromes nötig ist.

Die Netzspannung, z. B. 3 × 380 V wird mittels des Gleichstromrichters 24 gleichgerichtet und durch das Siebglied 25 geglättet und dem Zerhacker 26 zugeführt, wobei ein mit hoher Frequenz, z. B. 30 kHz pulsierender Strom erzeugt wird. Dieser wird mittels des Hochfrequenztransformators 27 transformiert und mittels des Gleichrichters 28 gleichgerichtet und durch das weitere Siebglied 29 geglättet. Der so gewonnene Gleichstrom wird mittels des Strommessers 30 gemessen und dessen Stromsignal einem Regler 31 zugeführt, der den Istwert mit einem Sollwert vergleicht. Das von diesem Regler 31 abgegebene Stellsignal steuert einen Modulator 32, der das Tastverhältnis des Zerhackers 26 steuert und der seinerseits mit einem Rechtecksignale liefernden Ozillator 33 verbunden ist.

Der Sollwert wird dem Regler 31 über einen Wählschalter 34 entweder von einem Handsteller 35 oder von einem an einem Computer zur Überwachung der gesamten Anlage angeschlossenen Digital-Analogumwandler 36 zugeführt.

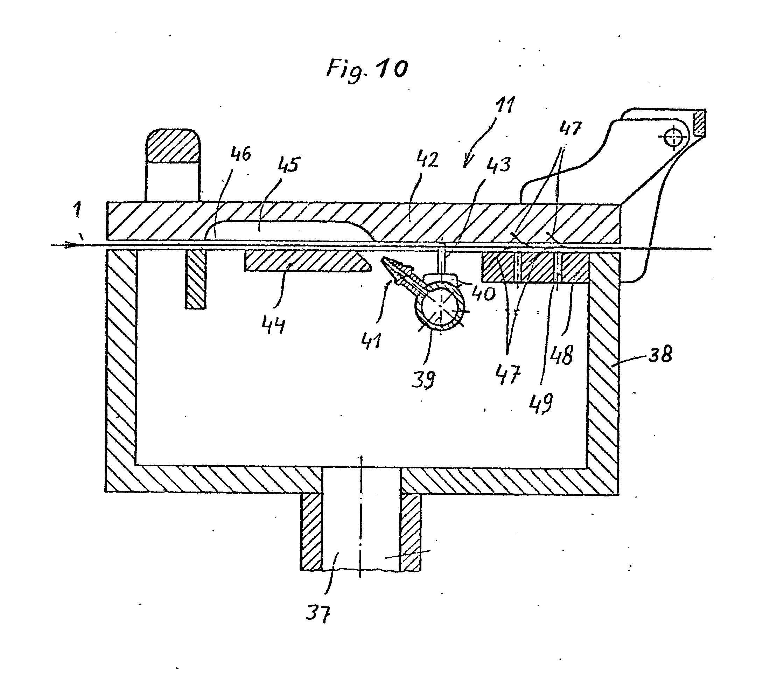

Figur 10 zeigt eine Spühleinrichtung 11. Diese besteht aus einem mit einem Abfluß 37 versehenen Behälter 38, indem eine Wasserzuleitung 39, die durch ein Ventil 40 absperrbar ist, und eine Düse 41 angeordnet ist. Dieser Behälter 38 ist mit einem Deckel 42 verschließbar, wobei bei geschlossenem Deckel 42 das Ventil 40 mittels des Stößels 43 in der geöffneten Stellung gehalten ist. In diesem Deckel 42 ist eine Vertiefung 45 eingearbeitet und im Bereich dieser Vertiefung 45 ist im Behälter 38 ein Steg 44 angeordnet, dessen Breite kleiner als die Länge der Vertiefung 45 ist, sodaß durch die Vertiefung 45 und der Steg 44 einen Kanal definiert ist. Dieser Kanal ist im Bereich seines Endes und seines Anfangs, gegen den die Düse 41 gerichtet ist, von einer Drahtführung 46 durchsetzt. Diese Drahtführung 46 verläuft in der Trenneben zwischen dem Behälter 38 und dem Deckel 42. In Durchlaufrichtung des Drahtes 1 nach dem Kanal sind elastische Dichtlippen 47 angeordnet, zwischen denen der Draht hindurchführbar ist. Dabei ist ein Teil der Dichtlippen 47 im Deckel 42 und der andere Teil in einem weiteren Steg 48 des Behälters 38 gehalten, wobei nach jeder Dichtlippe 47 Ablaufkanäle 49 angeordnet sind.

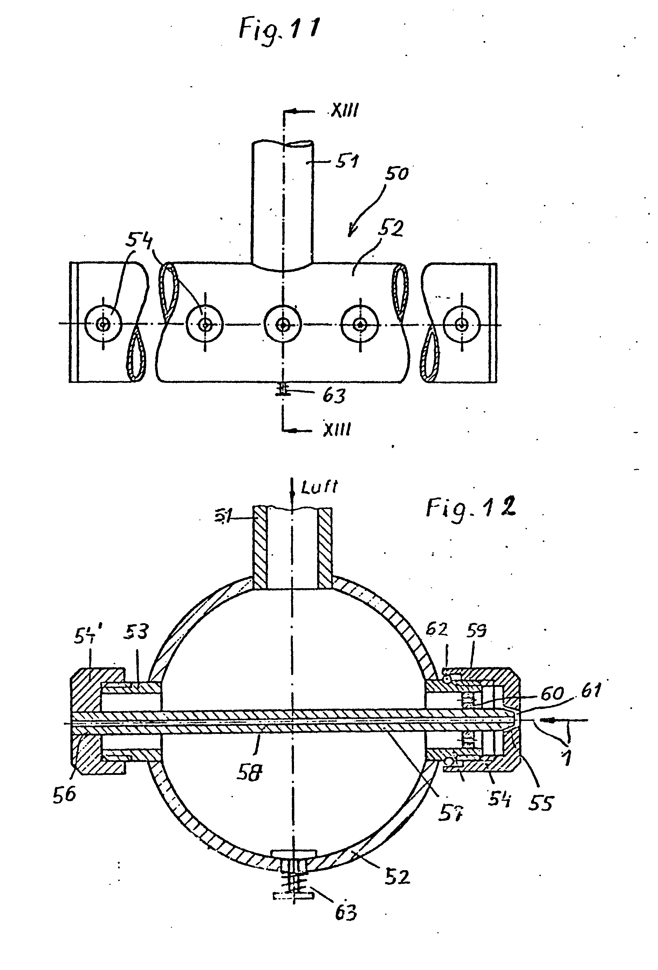

Nach der Spülvorrichtung 11 ist eine Trocknungsvorrichtung 50 angeordnet. Diese besteht, wie aus Fig. 11 und 12 ersichtlich ist, aus einem mit einer Luftzuführung 51 versehenen geschlossenen Kanal 52, der mit seitlich abstehenden und zueinander koaxialen Stutzen 53 versehen ist. Auf diese Stutzen 53 sind Hutmuttern 54, 54' aufschraubbar, von denen die eine 54 mit einer nach außen zu konvergierenden konischen Bohrung 55 und die andere mit einer zylindrischen Bohrung 56 versehen, in welche eine Drahtführung 57 eingedichtet ist. Diese Drahtführung 57 nimmt in ihrer axialen Bohrung 58 den Draht 1 auf und ist in dem der Draht-Einlaufseite zugekehrten Stutzen 53 in einer mit Bohrungen 59 versehenen Zentrierscheibe 60 gehalten. An ihrem der Draht-Einlaufseite zugekehrten Ende ist die vorzugsweise aus Keramik hergestellte Drahtführung 57 konisch ausgebildet und definiert gemeinsam mit der konischen Bohrung 55 der Hutmutter 54 eine Ringdüse 61, durch welche die Luft austritt und auf den einlaufenden Draht 1 auftrifft, um ihn zu trocknen. Um Luftverluste zu vermeiden ist die Hutmutter 54 gegen den Stutzen 53 mit einem Dichtungsring 62 abgedichtet.

Um gegebenenfalls an den Wänden des Kanals 52 niederschlagendes Wasser ablassen zu können, ist ein Ablaßventil 63 vorgesehen.

## Patentansprüche

1. Einrichtung zur Herstellung von galvanisch beschichteten Drähten, Bändern od. dgl., wobei einer Abwickeleinrichtung in an sich bekannter weise eine Wärmebehandlungseinrichtung (1') und dieser ein Beizbad (10), ein Reinigungsbad (12), verschiedene galvanische Bäder (22) zum galvanischen Auftrag von Beschichtungsmaterial und diesen Bädern, gegebenenfalls eine weitere Wärmebehandlungseinrichtung (1') und eine Aufwickeleinrichtung nachgeordnet sind, die Bäder (10, 12, 22) in eine Anzahl von parallel angeordneten Kammern (17) unterteilt sind, in denen je eine Elektrode (18) angeordnet ist, deren Potential gegen allen parallel laufenden Drähten (1), Bändern od. dgl., von denen je einer bzw. eines durch die Kammer (17) läuft, gemeinsamen Kontanktwalzen (2) oder eine andere Stromführung individuell regelbar ist, und daß jedem Bad (10, 12, 22) unmittelbar eine Spül- und Trocknungsvorrichtung (11, 50) nachgeschaltet ist.

2. Einrichtung nach Anspruch 1, dadurch gekennzeichnet, daß die Bäder (10, 12, 22) mittels isolierender Wände (16) in eine Anzahl von parallel angeordneten Kammern (17) unterteilt sind.

3. Einrichtung nach Anspruch 1 oder 2, dadurch gekennzeichnet, daß für sämtliche Kammern (17) eines Bades (10, 12, 22) eine gemeinsame Elektrolytzuführung (19) und ein Elektrolytsammelbehälter (23) vorgesehen ist, mit welchen jede durch Wände aus isolierendem Material gebildete Kammer (17) zwecks gegenseitiger Entkopplung der Elektrode (18) über vom Elektrolyt durchströmte Widerstandsstrecken in Form von längeren Verbindungskanälen (20, 21, 21') mit relativ kleinem Querschnitt verbunden sind.

4. Einrichtung nach Anspruch 1 oder 2, dadurch gekennzeichnet, daß im Beiz- und im Reinigungsbad (10, 12) durch welches ein und derselbe Draht (1) od. dgl. geführt ist, je eine Elektrode (18) angeordnet ist, zwischen denen eine regelbare Potentialdifferenz aufrecht erhalten ist, wobei in einem Bad eine anodische und im anderen eine kathodische Stromführung vorgesehen ist.

5. Einrichtung nach einem der Ansprüche 1 bis 4, dadurch gekennzeichnet, daß das Beizbad (10), das Reinigungsbad (12) und die galvanischen Bäder (22) ein einzelne parallele Kammern (17) unterteilt sind, in denen je eine Elektrode (18) angeordnet ist, und die Spannung zwischen je zwei in den über den gleichen Draht od. dgl. verbundenen, gegebenenfalls unterschiedliche Längen aufweisenden Kammern (17) des Beizbades, des Reinigungsbades und der galvanischen Bäder angeordneten Elektroden bzw. der über diese fließende Strom individuell regelbar ist, wobei für sämtliche Kammern (17) eines Bades (10, 12, 22) eine gemeinsame Elektrolytzuführung (19) und ein Elektrolytsammelbehälter (23) vorgesehen ist, mit welchen jede durch Wände aus isolierendem Material gebildete Kammer (17) zwecks gegenseitiger Entkopplung der Elektroden (18) über vom Elektrolyt durchströmte Widerstandsstrecken in Form von längeren Verbindungskanälen (20, 21. 21') mit relativ kleinem Querschnitt verbunden sind.

6. Einrichtung nach Anspruch 4 oder 5, dadurch gekennzeichnet, daß die Spülvorrichtung (11) eine Drahtführung (46) aufweist, welche einen Kanal (45), der gegebenenfalls gekrümmt ist, an mindestens zwei voneinander distanzierten Stellen kreuzt bzw. durchsetzt, gegen dessen Eingang eine mit einer Wasserzufuhr (39) verbundene Düse (41) gerichtet ist, wobei der Draht od. dgl. den Kanal (45) nahe dessen Eingang das letzte Mal auf seinem Weg kreuzt.

7. Einrichtung nach Anspruch 6, dadurch gekennzeichnet, daß die Drahtführung (46) in der Trennebene eines mit einem Ablauf versehenen Behälters (38) und dessen Deckel (42) angeordnet ist, wobei in dem letzteren der Kanal als Vertiefung (45) der Unterseite eingearbeitet ist und der Behälter (38) im Bereich dieser Vertiefung (45) einen Steg (44) aufweist, dessen Breite kleiner als die Länge der Vertiefung (45) ist und auf dem der Draht (1) agestützt ist.

8. Einrichtung nach Anspruch 6 oder 7, dadurch gekennzeichnet, daß zwischen der Wasserzuleitung (39) und der Düse (41) ein Ventil (40) zwischengeschaltet ist, welches mittels eines federbelasteten Stößels (43) betätigbar ist, der gegen den Deckel (42) drückt und in seiner gedrückten Stellung den Wasserdurchfluß freigibt.

9. Einrichtung nach Anspruch 6, dadurch gekennzeichnet, daß in Durchlaufrichtung des Drahtes (1) od. dgl. gesehen hinter der Düse (41) im Deckel (42) und in einem Steg (48) des Behälters (38) gehaltene Abstreiflippen (47) aus einem elastischen Material vorgesehen sind, zwischen denen der Draht (1) od. dgl. hindurchführbar ist.

10. Einrichtung nach einem der Ansprüche 1 bis 9, dadurch gekennzeichnet, daß die Trocknungsvorrichtung (50) durch einen mit einer Luftzufuhr (51) versehenen geschlossenen Kanal (52) gebildet ist, der von mindestens einer vorzugsweise aus Keramik hergestellten Drahtdurchführung (57) durchsetzt ist und zumindest an der Drahteinlaufseite der Drahtdurchführung (57) eine diese umgebende mit einer sich nach außen zu sich verjüngende Bohrung (55) versehene mit dem Kanal verbundene Platte vorgesehen ist, welche gemeinsam mit dem Endbereich der Drahtdurchführung (57) eine Ringdüse (61) bestimmt, durch welche die Luft auf den Draht (1) od. dgl. gerichtet, ausströmt.

11. Einrichtung nach Anspruch 10, dadurch gekennzeichnet, daß die Platte Teil einer Hutmutter (54) ist, die auf einen Ansatz des Kanals (52) aufschraubbar ist und die Drahtdurchführung (57) in diesem Ansatz mittels einer mit einer Vielzahl von axialen Bohrungen (59) versehenen Zentrierscheibe (60) gehalten ist und vorzugsweise zwischen Ansatz und Hutmutter (54) eine Dichtung (62) vorgesehen ist.

12. Einrichtung nach einem der Ansprüche 1 bis 11, dadurch gekennzeichnet, daß die Wärmebehandlungseinrichtung (1') mindestens zwei für die Stromzuführung zum Draht (1) od. dgl. vorgesehene Kontaktwalzen (2) aufweist, die mit einer regelbaren Spannungsquelle (4) verbunden sind und in unmittelbarer Nähe der Berührungspunkte des Drahtes (1) mit den Kontaktwalzen (2) Schleifer (5) angeordnet sind, welche den Spannungsabfall über die stromdurchflossene Drahtstrecke abgreifen, und die mit einem Multiplizierer (8) in Verbindung stehen, dem auch die Stromwerte zuführbar sind und der einen Regler (9) mit den Istwerten versorgt, welcher die Spannungsquelle (4) steuert.

13. Einrichtung nach einem der Ansprüche 1 bis 6, dadurch gekennzeichnet, daß die Elektrode (18) in einem Trog (72) aus isolierendem Material eingelegt ist und mit ihren Seitenwänden an den seitlichen Trogwänden sowie dem Trogboden an- bzw. aufliegt und die Elektrolytzuführung in eine Kammer (17) über einen unter dem Trog (72) angeordneten und in seinen Seitenwänden mit Auslässen (71) versehenen Kanal (70) erfolgt.

## Claims

1. Device for producing electropytically coated wires, bands or the like, wherein, in a conventional manner, a heat-treatment unit (1') is located downstream of a winding unit, a pickling bath (10), a cleaning bath (12), and various electrolytic baths (22) for the electrolytic application of coating material are located downstream of the said heat-treatment unit, and, if appropriate, a further heat-treatment unit (1') and a winding unit are located downstream of the said baths, the baths (10, 12, 22) are divided into a number of parallel chambers (17), in each of which one electrode (18) is arranged whose potential can be regulated individually against all parallel wires (1), bands or the like, one of which wires or bands runs through each of the chambers (17), common contact rollers (2) or another current conductor, and a rinsing and drying unit (11, 50) is located directly downstream of each bath (10, 12, 22).

2. Device according to Claim 1, characterised in that the baths (10, 12, 22) are divided into a number of parallel chambers (17) by means of insulating walls (16).

3. Device according to Claim 1 or 2, characterised in that a common electrolyte feed (19) and an electrolyte-collecting vessel (23) are provided for all chambers (17) of a bath (10, 12, 22), each chamber (17) formed by walls of insulating material being conected, for the purpose of mutual decoupling of the electrodes (18), to the said electrolyte-collecting vessel and electrolyte feed via resistance sections which are in the form of relatively long connecting channels (20, 21, 21') having a relatively small cross-section, and through which the electrolyte flows.

4. Device according to Claim 1 or 2, characterised in that one electrode (18) each is arranged in the pickling bath and in the cleaning bath (10, 12) through which one and the same wire (1) or the like is fed, a regulatabele potential difference being maintrained between the said elctrodes, and the electrode in one bath being connected as an annode and that in the other bath being connected as the cathode.

5. Device according to one of Claims 1 to 4, characterised in that the pickling bath (10), the cleaning bath (12) and the electrolytic baths (22) are divided into individual parallel chambers (17), in each of which an electrode (18) is arranged, and the voltage between two electrodes arranged in the chambers (17) of the pickling bath, of the cleaning bath and of the electrolytic baths, which chambers are connected by the same, wire or the like and may be of different lengths, or the current flowing through these electrodes, can be regulated individually, and a common electrolyte feed (19) and an electrolyte-collective vessel (23) is provided for all chambers (17) of a bath (10, 12, 22), each chamber (17) formed by walls of insulating material being connected, for the purpose of mutual decoupling of the electrodes (18), to the said electrolyte-collecting vessel and electrolyte feed via resistance sections which are in the form of relatively long connecting channels (20, 21, 21') having a relatively small cross-section, and through which the electrolyte flows.

6. Device according to Claim 4 or 5, characterised in that the rinsing apparatus (11) has a wire guide (46) which crosses or passes through a channel (45), which, if required, is curved, at at least two points a distance apart, a nozzle (41) connected to a water feed (39) being directed towards the entrance of the said channel, and the wire or the like crossing the channel (45) on its way for the last time at a point close to its entrance.

7. Device according to Claim 6, characterised in that the wire guide (46) is arranged in the plane of separation of a vessel (38), provided with an outflow, and its lid (42), and the channel is incorporated in the latter in the form of a depression (45) in the lower side and the vessel (38) has a crosspiece (44) in the region of this depression (45), the width of this cross piece being smaller than the length of the depression (45), and the wire (1) being supported on the said crosspiece.

8. Device according to Claim 6 or 7, characterised in that a valve (40) is located between the water feed line (39) and the nozzle (41), which valve can be actuated by means of a spring-loaded tappet (43) which presses against the lid (42) and, in its depressed position, allows water to flow through.

9. Device according to Claim 6, characterised in that, viewed in the direction in which the wire (1) or the like runs, stripping lips (47) made of an elastic material are provided which are held behind the nozzle (41) in the lid (42) and in a crosspiece (48) of the vessel (38), and between which the wire (1) or the like can be fed.

10. Device according to one of Claims 1 to 9, charracterised in that the drying unit (50) is formed by a closed channel (52) which is provided with an air supply (51) and through which passes at least one wire duct (57), preferably made of a ceramic, and, at least at the wire-inlet side of the wire duct (57), a plate is provided which surrounds this wire duct, is provided with a hole (55) narrowing towards the outside, is connected to the channel, and, together with the end section of the wire duct (57), forms an annular nozzle (61) through which the air, directed on to the wire (1) or the like, flows out.

11. Device according to Claims 10, characterised in that the plate is part of a cap nut (54) which can be screwed on to a connecting piece of the channel (52), and the wire duct (57) is held in this connecting piece by means of a centring washer (60) provided with a plurality of axial holes (59), and, preferably, a seal (62) is provided between the connecting piece and the cap nut (54).

12. Device according to one of Claims 1 to 11, characterised in that the heat-teatment unit (1') has at least two contract rollers (2) which are provided for carrying the current to the wire (1) or the like and are connected to a regulatable voltage source (4), and sliding contacts (5) are arranged in direct proximity to the points of contact of the wire (1) with the contact rollers (2), which sliding contacts pick up the voltage drop over the wire section through which current is flowing and are connected to a multiplier (8) to which it is also possible to feed the current values and which supplies a regulator (9) with the actual values, which regulator controls the voltage source (4).

13. Device according to one of Claim 1 to 6, characterised in that the elctrode (18) is placed in a trough (72) made of an insulating material and its side walls lie against the lateral walls of the trough while the elctrode rests on the bottom of the trough, and the electrolyte is fed into a chamber (17) via a channel (70) which is arranged underneath the trough (72) and provided with outlets (71) in its side walls.

**Revendications**

1. Dispositif de production de fils, bandes ou produits semblables revêtus par voie électrolytique, dans lequel un dispositif dérouleur est suivi de façon connue d'un dispositif de traitement thermique (1'), celui-ci est suivi d'un bain de décapage (10), d'un bain de nettoyage (12), de différents bains d'électrolyse (22) pour l'application par électrolyse de matériau de revêtement, et ces bains sont éventuellement suivis d'un autre dispositif de traitement thermique (1') et d'un dispositif enrouleur, les bains (10, 12, 22) sont divisés en un certain nombre de chambres (17) disposées parallèlement, dans chacune desquelles est placée une électrode (18) dont la tension, par rapport à des rouleaux de contact (2) communs à tours les fils (1), bandes ou produits semblables circulant parallèlement, dont un seul ou une seule passe dans chaque chambre (17), ou à un autre porteur de courant, est réglable individuellement, et chaque bain (10, 12, 22) est suivi directement d'un dispositif de rinçage et de séchage (11, 50).

2. Dispositif selon la revendication 1, caractérisé par le fait que les bains (10, 12, 22) sont divisés en un certain nombre de chambres (17) disposées parallèlement par des parois isolantes (16).

3. Dispositif selon l'une des revendications 1 et 2, caractérisé par le fait que pour toutes les chambres (17) d'un bain (10, 12, 22) sont prévus une arrivée d'électrolyte commune (19) et un récipient collectur d'électrolyte (23) auxquells chaque chambre (17), formée par des parois en matière isolante, en vue du découplage mutuel des électrodes (18), est reliée par des chemins résistants parcourus par l'électrolyte et formés par des conduits de liaison par l'électrolyte et formés par des conduits de liaison assez longs (20, 21, 21') de section relativement petite.

4. Dispositif selon l'une des revendications 1 et 2, caractérisé par le fait que dans le bain de décapage (10) et dans le bain de nettoyage (12), dans lequel passe un seul et même fil (1) ou produit semblable, est placée une électrode (18), et entre les deux électrodes est maintenue une différence de potentiel réglable, dans un bain étant prévu un passage de courant anodique et dans l'autre un passage de courant cathodique.

5. Dispositif selon l'une des revendications 1 à 4, caractérisé par le fait que le bain de décapage (10), le bain de nettoyage (12) et les bains d'électrolyse (22) sont divisés en chambres parallèles (17) dans chacune desquelles est placée une électrode (18), et la tension, entre les deux électrodes placées dans des chambres (17) réunies par le même fil ou produit semblable, et éventuellement de longueur différente, du bain de décapage, du bain de nettoyage et des bains d'électrolyse, ou le courant passant par celles-ci, est réglable individuellement, pour toutes les chambres (17) d'un bain (10, 12, 22) étant prévus une arrivée d'électrolyte commune (19) et un récipient collecteur d'électrolyte (23) auxquels chaque chambre (17), formée par des parois en matière isolante, en vue du découplage mutuel des électrodes (18) et reliée par des chemins résistants parcourus par l'électrolyte et formés par des conduites de liaison assenz longs (20, 21, 21') de section relatvement petite.

6. Dispositif selon l'une des revendications 4 et 5, caractérisé par le fait que le dispositif de rinçage (11) présente un passage de fil (46) qui croise ou traverse en au moins deux endroits distants l'un de l'autre un canal (45) éventuellement courbe, vers l'entrée duquel est dirigé un ajutage (41) relié à une arrivée d'eau (39), le fil ou produit semblable croisant ce canal (45) pour la dernière fois sur son chemin, près de son entrée.

7. Dispositif selon la revendication 6, caractérisé par le fait que le passage de fil (46) est placé dans le plan de séparation d'un récipient (38), pourvu d'une sortie, et du couvercle (42) de celui-ci, le canal étant ménagé dans ce dernier sous forme d'évidement (45) ménagé dans sa face inférieure et le récipient (38) présentant dans la zone de cet évidement (45) une traverse (44) dont la largeur est inférieure à la longueur de l'évidement (45) et qui soutient le fil (1).

8. Dispositif selon l'une des revendications 6 et 7, caractérisé par le fait qu'entre l'arrivée d'eau (39) et l'ajutage (41) est placé un clapet (40) manoeuvrable par un poussoir à ressort (43) qui s'appuie contre le couvercle (42) et qui, en position appuyée, permet le passage d'eau.

9. Dispositif selon la revendication 6, caractérisé par le fait qu'après l'ajutage (41), dans le sens de pasage du fil (1) ou du produit semblable, sont prévues des lèvres racleuses (47) en matière élastique montées dans le couvercle (42) et dans une traverse (48) du récipient (38), entre lesquelles le fil (1) ou le produit semblable peut passer.

10. Dispositif selon l'une des revendications 1 à 9, caractérisé par le fait que le dispositif de séchage (50) est formé par un conduit fermé (52) pourvu d'une arrivée d'air (51) que traverse au moins un passage de fil (57) de préférence en céramique, et au moins du côté de l'entrée de ce passage de fil (57) est prévue une plaque qui entoure ce passage, qui est pourvue d'un orifice (55) se rétrécissant vers l'extérieur, qui est reliée au conduit et qui détermine avec la partie ectrême du passage de fil (57) un ajutage annulaire (61) dirigé vers le fil (1) ou le produit semblable et par où l'air sort.

11. Dispositif selon la revendication 10, caractérisé par le fait que la plaque est une partie d'un écrou à chapeau (54) qui peut être vissé sur un appendice du conduit (52), le passage de fil (57) est tenu dans cet appendice par un dispue de centrage (60) pourvu d'une série de trous axiaux (59), et, de préférence, entre l'appendice et l'écrou à chapeau (54) est prévu un joint d'étanchéité (62).

12. Dispositif selon l'une des revendications 1 à 11, caractérisé par le fait que le dispositif de traitement thermique (1') présente au moins deux rouleaux de contact (2), pour l'arrivée de courant au fil (1) ou au produit semblable, qui sont reliés à une source de tension réglable (4), et à proximité immédiate des points de contact du fil (1) avec ces rouleaux de contact (2) sont placés des frotteurs (5) qui captent la chute de tension dans le tronçon de fil parcouru par le courant et qui sont reliés à un multiplicateur (8) auquel peuvent aussi être transmises les valeurs de courant et qui fournit les valeurs instantanées à un régulateur (9) qui commange la source de tension (4).

13. Dispositif selon l'une des revendications 1 à 6, caractérisé par le fait que l'électrode (18) est placée dans une cuve (72) en matière isolante et s'appuie par ses parois latérales sur les parois latérales de cette cuve ainsi que sur le fond de celle-ci, et l'arrivée de l'électrolyte dans une chambre (17) s'effectue par un conduit (70) placé sous la cuve (72) et pourvu de sorties (71) dans ses parois latérales.

Fig. 1

Fig. 4

Fig. 2

**Fig. 3**

18   17   10,12   16

V

1   18   16   17

**Fig. 5**

16   17   18   VII

21   VII   21¹

19   20

Fig. 6

Fig. 7

Fig. 5a

Fig. 6a

Fig.8

0 032 892

Fig.9

3~380V

24  25  26  27  28  29  30

$\overline{=} I$ KONST.

Istwert

33  32  PID  31

Sollwert

34

35

36

Digigitaler Einstellwert

21

0 032 892

Fig. 10

0 032 892

Fig. 11

Fig. 12